# EUROPEAN PATENT SPECIFICATION

(11) **EP 3 312 085 B1**
(45) Date of publication and mention of the grant of the patent: **23.02.2022**
(21) Application number: 16870760.2
(22) Date of filing: 01.12.2016
(51) Int. Cl.: B64C 25/36, B60T 1/16, B64C 25/42, B64D 27/24, B64D 41/00, H02P 3/18, B60T 8/17

(54) **ELECTRIC TAXIING SYSTEM OF AIRCRAFT AND METHOD FOR CONTROLLING THE SYSTEM**
ELEKTRISCH ANGETRIEBENES ROLLSYSTEM FLUGZEUG UND VERFAHREN ZUR STEUERUNG DIESES SYSTEMS
SYSTÈME DE ROULAGE ÉLECTRIQUE POUR AÉRONEF ET PROCÉDÉ DE COMMANDE DUDIT SYSTÈME

(30) Priority: 02.12.2015 JP 2015235530
(43) Date of publication of application: 25.04.2018
(73) Proprietor: IHI Corporation, Tokyo 135-8710 (JP)
(72) Inventor: MORIOKA, Noriko, Tokyo 135-8710 (JP); KAKIUCHI, Daiki, Tokyo 135-8710 (JP); OYORI, Hitoshi, Tokyo 135-0061 (JP); ASAKURA, Hiroyuki, Amagasaki-shi, Hyogo 660-0891 (JP)
(74) Representative: MERH-IP Matias Erny Reichl Hoffmann Patentanwälte PartG mbB
(86) International application number: PCT/JP2016/085687
(87) International publication number: WO 2017/094823

(56) References cited:
- DE-A1-102013 209 538
- JP-A- 2001 095 272
- JP-A- 2009 023 628
- US-A1- 2008 258 014
- US-A1- 2009 076 668
- US-A1- 2010 109 581
- US-A1- 2010 252 691
- US-A1- 2012 031 071
- US-A1- 2016 325 826

## Description

### TECHNICAL FIELD

The present disclosure relates to aircrafts using the power of electric motors as driving force.

### BACKGROUND ART

In general, an aircraft using jet engines as driving sources taxies (runs with its own power) on a taxiway of an airfield by utilizing the thrust of the jet engines. However, since the jet engines consume much fuel in taxiing, attempts have been made in recent years to improve fuel economy by using driving force of electric motors for taxiing. Patent Literature 1 has disclosed a related technique.

Not only can electric motors used as driving force for taxiing be used to assist the thrust of jet engines in running for takeoff, but also be utilized as brake sources in landing. In the latter case, the electric motors, functioning as generators, generate regenerative power. Patent Literatures 2 and 3 have disclosed related techniques.

The regenerative power may be stored by charging in a battery in the aircraft, but in that case, the charge control of the battery would become complicated. To avoid such a situation, it is ideal to consume all the regenerative power when it is generated, if possible. A method to realize such an idea is that if the regenerative power generated by the electric motors of the aircraft is equal to or less than the power to be consumed by a load, the regenerative power is supplied to the load and that if it is more than the power to be consumed by the load, the regenerative power is supplied to an internal resistance. Patent Literature 4 has disclosed related techniques.

Patent Literature 5 discloses a short take-off and landing (STOL) aircraft capable of takeoff running in a short distance using a combination of the propulsion of drive wheels and the propulsion of a propulsion unit, and of landing running in a short distance using a driving force of the drive wheels. A movable gear is disposed as a fourth gear behind the center of gravity of an airframe and behind left and right main gears. The movable gear is configured such that the distance to ground can be changed arbitrarily. The aircraft performs takeoff running using the combination of the propulsion of left and right engines on the airframe and the driving propulsion of the left and right drive wheels. If the airframe starts pitching up, a torque control system controls the torques of left and right motors separately and independently.

### CITATION LIST

### PATENT LITERATURE

Patent Literature 1: US Patent Application Publication No. 2013/0284854
Patent Literature 2: Japanese Patent Application Publication No. 2009-23628
Patent Literature 3: Japanese Patent Application Publication No. 2009-23629
Patent Literature 4: Japanese Patent Application Publication No. 2001-95272
Patent Literature 5: Japanese Patent Application Publication No. 2009-023628

### SUMMARY

### TECHNICAL PROBLEM

In the above method in which the supply destination is switched depending on the magnitude of the regenerative power, the regenerative power is wastefully consumed by the internal resistance when the regenerative power cannot be consumed by the load.

An object of the present disclosure is to effectively utilize regenerative power generated in electric motors when the electric motors, used as driving force sources in taxiing of the aircraft and running for takeoff, are utilized as brake sources in landing.

### SOLUTION TO PROBLEM

The above problem is solved by a system according to claim 1 and a method according to claim 4.

### BRIEF DESCRIPTION OF DRAWINGS

[Fig. 1] Fig. 1 is a perspective view of an aircraft on which an electric taxiing system according to an embodiment of the present disclosure is mounted.
[Fig. 2] Fig. 2 is an explanatory diagram illustrating an electrical schematic configuration inside the aircraft of Fig. 1.
[Fig. 3] Fig. 3 is an explanatory diagram illustrating another example of an electrical schematic configuration inside the aircraft of Fig. 1.

### DESCRIPTION OF EMBODIMENTS

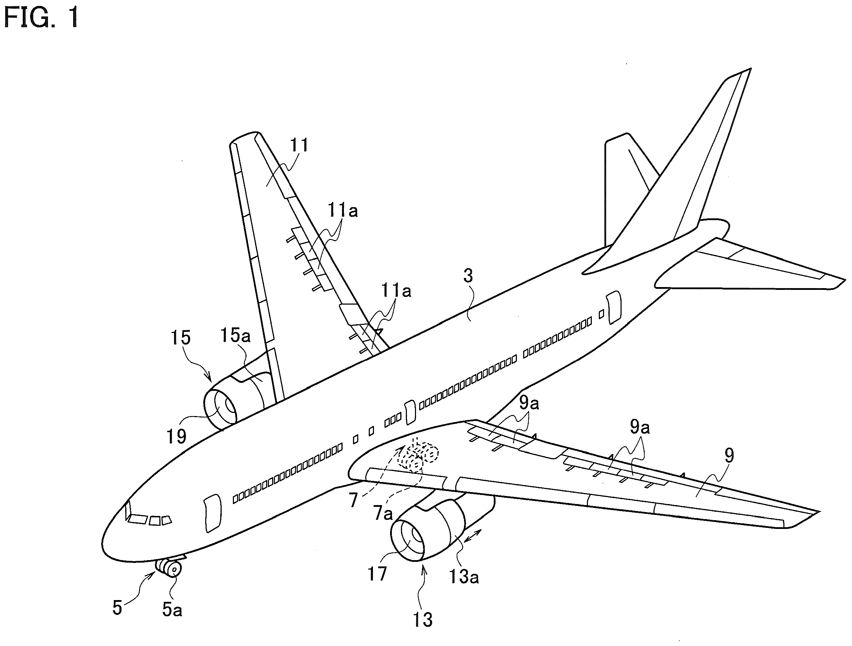

Hereinafter, an embodiment of this disclosure will be described with reference to the drawings. Fig. 1 is a perspective view of an aircraft on which an electric taxiing system according to an embodiment of this disclosure is mounted.

An aircraft 1 illustrated in Fig. 1 has a front landing gear 5 and main landing gears 7 which are retractable and located under a fuselage 3. The front landing gear 5 has one or more wheels 5a, and each of the right and left main landing gears 7 has one or more wheels 7a. Provided on the right and left sides of the fuselage 3 are wings 9 and 11. The wings 9 and 11 have multiple spoilers 9a and 11a, respectively, that are raised in landing and apply breaking force to the aircraft 1. The wings 9 and 11 support engine nacelles 13 and 15, respectively.

The engine nacelles 13 and 15 house jet engines 17 and 19, respectively. Formed between the engine nacelle 13 and the jet engine 17 is a bypass air flow passage for the air bypassing the jet engine 17 among the air sucked into the engine nacelle 13 by a fan of the jet engine 17. Similarly, formed also between the engine nacelle 15 and the jet engine 19 is a bypass air flow passage of the air bypassing the jet engine 19 among the air sucked into the engine nacelle 15 by a fan of the jet engine 19.

Provided on the engine nacelles 13 and 15 are slide type nacelle covers 13a and 15a, respectively. The nacelle covers 13a and 15a together with the spoilers 9a and 11a of the above-described wings 9 and 11 constitute a reverse thrust unit for applying braking in landing of the aircraft 1.

When the nacelle covers 13a and 15a slide toward the rear of the aircraft 1, ring-shaped gaps are formed in the engine nacelles 13 and 15. Through the gaps, the bypass air flow passages in the engine nacelles 13 and 15 come to communicate with the outsides of the engine nacelles 13 and 15. Then, the bypass air flows in the engine nacelles 13 and 15 are discharged to the outsides of the engine nacelles 13 and 15 through the ring-shaped gaps to be air flows deflected toward the front of the aircraft 1. These deflected air flows apply breaking force to the aircraft 1.

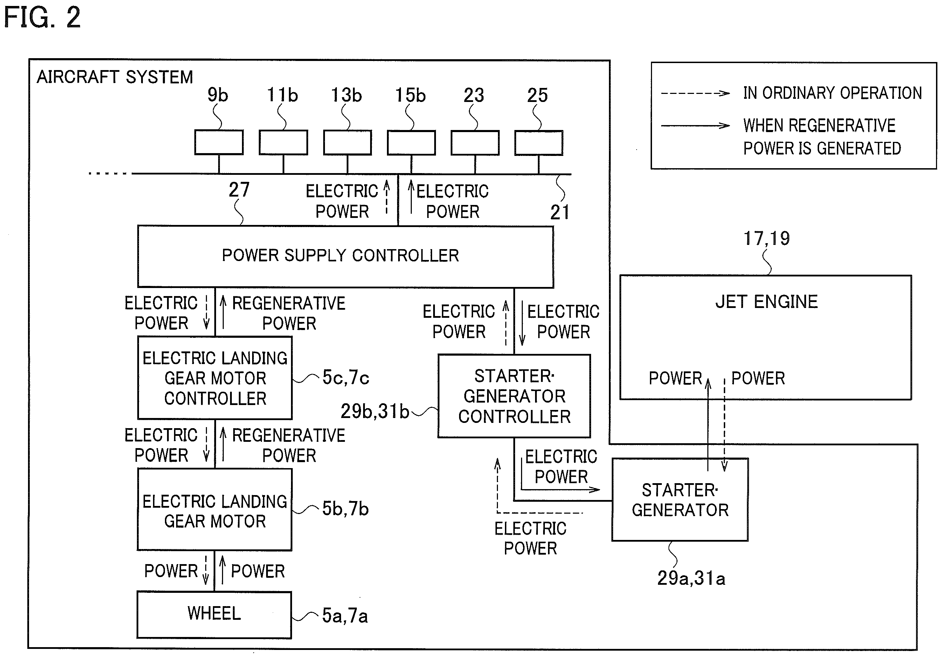

Fig. 2 is an explanatory diagram illustrating an electrical schematic configuration inside the aircraft 1 of Fig. 1. The aircraft 1 has a power supply bus 21 constituting a power supply line for supplying electric power to internal electric elements. The power supply bus 21 supplies electric power to an electric actuator 9b (electric element) for operating the spoilers 9a and an electric actuator 11b (electric element) for operating the spoilers 11a, each via a non-illustrated controller. In addition, the power supply bus 21 supplies electric power to an electric actuator 13b (electric element) for operating the nacelle cover 13a and an electric actuator 15b (electric element) for operating the nacelle cover 15a, each via a non-illustrated controller. Further, the power supply bus 21 supplies electric power also to electric devices such as a refrigeration cycle (VCS) 23 that performs air conditioning in the passenger compartment of the aircraft 1 and a control system (environmental control system; ECS) 25 thereof.

Moreover, the power supply bus 21 is connected to a power supply controller 27 (power supply control unit). To the power supply controller 27, an electric landing gear motor 5b (taxiing motor) is connected via a controller 5c, and an electric landing gear motor 7b (taxiing motor) is connected via a controller 7c. In addition, to the power supply controller 27, a starter-generator 29a (electric element, electric assist motor) is connected via a controller 29b, and a starter·generator 31a (electric element, electric assist motor) is connected via a controller 31b.

The electric landing gear motor 5b is provided for the wheel 5a of the front landing gear 5, and rotates the wheel 5a with electric power supplied from the power supply controller 27 via the electric landing gear motor controller 5c. The electric landing gear motor 7b is provided for the wheel 7a of each of the right and left main landing gears 7, and rotates the wheels 7a with electric power supplied from the power supply controller 27 via the electric landing gear motor controller 7c. Thus, the electric landing gear motors 5b and 7b can function as electric motors serving as power sources when the aircraft 1 is taxiing or running for takeoff. The electric landing gear motors 5b,7b can be constituted, for example, of in-wheel motors housed in the hubs of the wheels 5a and 7a or electric motors having output shafts drivingly connected to the shafts of the wheels 5a and 7a.

When the wheel 5a is rotated with no electric power supplied from the power supply controller 27, the electric landing gear motor 5b applies breaking force (regenerative brake) caused by rotational resistance to the rotating wheel 5a, and generates regenerative power according to the braking force. When the wheel 7a is rotated with no electric power supplied from the power supply controller 27, the electric landing gear motor 7b applies breaking force (regenerative brake) caused by rotational resistance to the rotating wheel 7a, and generates regenerative power according to the braking force. In other words, the electric landing gear motors 5b and 7b can be utilized as brake sources in landing of the aircraft 1. Note that the regenerative power generated by the electric landing gear motors 5b and 7b are recovered by the power supply controller 27 via the electric landing gear motor controllers 5c and 7c, respectively.

The regenerative power recovered by the power supply controller 27 are supplied to the electric actuators 9b, 11b, 13b, and 15b and the starter·generators 29a and 31a, which are electric elements, and can also be supplied to electric devices such as the refrigeration cycle 23 and the control system 25 thereof.

The starter·generator 29a is connected to a turbine shaft of the jet engine 17 via a non-illustrated power transmission system. The starter·generator 29a assists the rotation of the turbine shaft of the jet engine 17 with the electric power supplied from the power supply controller 27 via the starter·generator controller 29b. The starter·generator 31a is connected to a turbine shaft of the jet engine 19 via a non-illustrated power transmission system. The starter·generator 31a assists the rotation of the turbine shaft of the jet engine 19 with the electric power supplied from the power supply controller 27 via the starter·generator controller 31b.

The starter-generator 29a functions as a generator when not receiving electric power from the power supply controller 27, and generates electricity by being rotated by the power transmitted from the jet engine 17 via a non-illustrated power transmission system. The starter·generator 31a functions as a generator when not receiving the electric power from the power supply controller 27, and generates electricity by being rotated by the power transmitted from the jet engine 19 via a non-illustrated power transmission system. The electric power generated by the starter·generators 29a and 31a are recovered by the power supply controller 27 via the starter-generator controllers 29b and 31b, respectively.

The power supply controller 27 recovers the regenerative power generated by the electric landing gear motors 5b and 7b and the electric power generated by the starter·generators 29a and 31a, and supplies the recovered power to the electric elements and electric devices in operation, connected to the power supply bus 21 or the power supply controller 27, and causes them to consume the recovered power.

The electric taxiing system of the aircraft 1 in this embodiment is constituted of the power supply controller 27; the electric landing gear motors 5b and 7b; the starter·generators 29a and 31a; the electric actuators 9b, 11b, 13b, and 15b, the refrigeration cycle 23, and the control system 25 thereof, which are connected to the power supply bus 21; and the like.

Next, operation (effects) of the electric taxiing system of this embodiment will be described. First, when the aircraft 1 taxies in takeoff or landing, the electric power generated by the starter·generators 29a and 31a is supplied from the power supply controller 27 to at least one or more of the electric landing gear motors 5b and 7b via the corresponding electric landing gear motor controllers 5c and 7c. The electric landing gear motors 5b and 7b supplied with the electric power rotate the corresponding wheels 5a and 7a and cause the aircraft 1 to electrically taxi. Note that the electric landing gear motors 5b and 7b can also assist the thrust of the jet engines 17 and 19 by rotating the wheels 5a and 7a with the electric power generated by the starter·generators 29a and 31a in running for takeoff.

When the wheels 7a touch down the runway in landing of the aircraft 1, the electric landing gear motors 7b rotate along with the wheels 7a which have touched down, and regenerative power is generated by the electric landing gear motor 7b according to the breaking force. Subsequently, when the wheel 5a touches down the runway, the electric landing gear motor 5b is rotated along with the wheel 5a which has touched down, regenerative power is generated by the electric landing gear motor 5b according to the breaking force. This regenerative power is at least supplied to the electric actuators 9b, 11b, 13b, and 15b from the power supply controller 27 via the power supply bus 21 and the (non-illustrated) corresponding controllers.

The electric actuators 9b, 11b, 13b, and 15b supplied with the regenerative power operate the spoilers 9a and 11a and the nacelle covers 13a and 15a to brake the aircraft 1 and consume the supplied regenerative power. In other words, while at least one or more of the electric landing gear motors 5b and 7b are generating regenerative power, the regenerative power is supplied to the electric actuators 9b and 11b to operate the spoilers 9a and 11a, or the regenerative power is supplied to the electric actuators 13b and 15b to operate the nacelle covers 13a and 15a.

In addition, in the case where the aircraft 1 cancels landing halfway through the process and takes off again (touch-and-go), the regenerative power generated by any one or more of the electric landing gear motors 5b and 7b with the wheel 5a and/or the wheels 7a touching the ground of the runway in landing, is supplied also to the starter·generators 29a and 31a from the power supply controller 27 via the starter·generator controllers 29b and 31b.

The starter·generators 29a and 31a supplied with the regenerative power each function as a motor and rotate the turbine shafts of the jet engines 17 and 19, consuming the supplied regenerative power. With this operation, the starter·generators 29a and 31a assist the rotation of the jet engines 17 and 19, respectively, which are accelerated for re-takeoff of the aircraft 1. In other words, while at least one or more of the electric landing gear motors 5b and 7b are generating regenerative power, the regenerative power is supplied to the starter·generators 29a and 31a. Note that when returning the spoilers 9a and 11a in flip-up positions to their original positions, or sliding forward the nacelle covers 13a and 15a in the rear positions, during this re-takeoff, the regenerative power may be supplied to the corresponding electric actuators 9b, 11b, 13b, and 15b to operate the spoilers 9a and 11a and the nacelle covers 13a and 15a. In addition, to increase the breaking force by increasing the rotation speed of the jet engines 17 and 19 while the nacelle covers 13a and 15a are at the rear positions, the starter·generators 29a and 31a may be supplied with the regenerative power to assist the rotation of the jet engines 17 and 19.

Note that the electric devices such as the refrigeration cycle 23 and the control system 25 thereof connected to the power supply bus 21 are always supplied with the electric power generated by the starter·generators 29a and 31a while the jet engines 17 and 19 are in operation.

In addition, in landing and re-takeoff of the aircraft 1, the regenerative power generated by one or more of the electric landing gear motors 5b and 7b can be supplied to the above electric devices from the power supply controller 27 via the power supply bus 21 to cause the electric devices to consume the regenerative power.

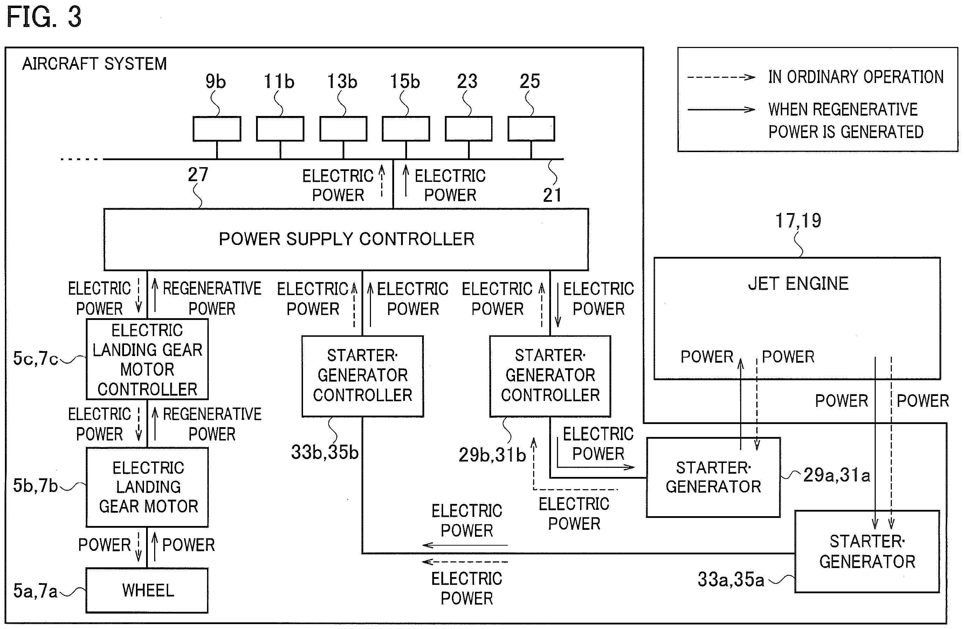

Further, as illustrated in Fig. 3, the jet engine 17 may be additionally provided with another system of the starter-generator 33a and the starter·generator controller 33b, which functions as a generator always on. The jet engine 19 may be additionally provided with another system of the starter·generator 35a and the starter·generator controller 35b, which function as a generator always on.

In these cases, even when the starter·generators 29a and 31a are functioning as motors, the electric power generated by the starter-generator 33a and 35a can be stably supplied to the electric devices such as the refrigeration cycle 23 and the control system 25 thereof connected to the power supply bus 21.

Each of the power supply controller 27, the electric landing gear motor controllers 5c and 7c, and the starter-generator controllers 29b, 31b, 33b, and 35b may include, for example, an inverter, converter, switch, relay, capacitor, voltage current sensor, control section, and the like, to perform the above corresponding functions. The control section, for example, includes a microcomputer having a control program for controlling each controller. The control section may include other conventional components, such as an input interface circuit, output interface circuit, storage (for example, a ROM, a RAM), and the like, for example. The RAM and the ROM can store processing results and a control program executed by the control section. The configuration and algorithms of the control section may be any combination of hardware and software to perform the above functions.

As described above, according to the aircraft 1 of this embodiment, the aircraft 1 electrically taxies using the electric landing gear motors 5b and 7b. The regenerative power generated by the electric landing gear motors 5b and 7b in landing are supplied to the electric actuators 9b, 11b, 13b, and 15b of the spoilers 9a and 11a and the nacelle covers 13a and 15a which are driven in landing of the aircraft 1, or the starter·generators 29a and 31a which are driven on re-takeoff following landing, and the regenerative power is consumed by them.

In this manner, the regenerative power generated by the electric landing gear motors 5b and 7b in landing of the aircraft 1 is not wastefully consumed as surplus electric power by a dummy load (for example, an internal resistance with a high resistance value), and can be efficiently consumed as power by the electric actuators 9b, 11b, 13b, and 15b as well as the starter·generators 29a and 31a in landing or re-takeoff following the landing. Thus, the regenerative power can be effectively utilized. In addition, since the regenerative power (at least part of it) is consumed when generated, charging it to a battery can be eliminated.

In the aircraft 1, the regenerative power generated by the electric landing gear motors 5b and 7b in landing of the aircraft 1 is also supplied to the electric devices such as the refrigeration cycle 23 and the control system 25 thereof.

Thus, even when all the regenerative power generated by the electric landing gear motors 5b and 7b is not consumed by the electric actuators 9b, 11b, 13b, and 15b and the starter·generators 29a and 31a, the surplus regenerative power can be utilized by the above electric devices.

Although descriptions have been provided for an embodiment of the present disclosure as described above, this embodiment is a mere example described for facilitating understanding of the invention. The technical scope of the present disclosure is not limited to the specific technical items disclosed in the above embodiment, and includes modifications, changes, alternative techniques, and the like that can be easily derived therefrom.

For example, although descriptions have been provided in the above embodiment for the case where all the wheels 5a and 7a of the front landing gear 5 and the main landing gears 7 are provided with the electric landing gear motors 5b and 7b, only any one of the wheels 5a and 7a may be provided with the electric landing gear motor. In the case where there are multiple wheels 5a, only one of them may be provided with the electric landing gear motor 5b. Similarly, in the case where there are multiple wheels 7a, only one of them may be provided with the electric landing gear motor 7b.

In addition, the supply destination of the regenerative power generated by the electric landing gear motors 5b and 7b may be either one of the electric actuators 9b, 11b, 13b, and 15b in landing and the starter·generators 29a and 31a in re-takeoff.

Moreover, in addition to the above electric elements, various electric elements driven for landing and re-takeoff may be one of the supply destinations of the regenerative power generated by the electric landing gear motors 5b and 7b in landing and in re-takeoff following landing, in which the regenerative power is generated by the electric landing gear motors 5b and 7b.

In addition, the electric devices such as the refrigeration cycle 23 and the control system 25 thereof may be excluded from the supply destinations of the regenerative power generated by the electric landing gear motors 5b and 7b.

An electric taxiing system of an aircraft according to an aspect of the present disclosure includes: a wheel of an aircraft; a taxiing motor which is rotated together with the wheel in landing of the aircraft to apply breaking force to the wheel and to generate regenerative power according to the breaking force, and which rotates the wheel in taxiing of the aircraft; and a power supply control unit which supplies the regenerative power to an electric element of the aircraft, the electric element being driven in order for the aircraft to perform landing or re-takeoff after cancelling landing.

According to this electric taxiing system, the regenerative power generated by the taxiing motor which are rotated together with the wheel in landing of the aircraft is supplied to and consumed by the electric element driven in landing of the aircraft and re-takeoff of the aircraft following landing.

Hence, in the case where the taxiing motor is used to electrically taxi the aircraft, the regenerative power generated by the taxiing motor in landing is not wastefully consumed by a dummy load (such as an internal resistance with a high resistance value) as surplus electric power, but the regenerative power is efficiently consumed by the electric element, which is a supply destination, and thus the regenerative power can be effectively utilized.

Note that the electric element includes a reverse thrust unit which deflects a bypass air flow of a jet engine of the aircraft toward a front of the aircraft in landing of the aircraft.

In addition, for example, the electric element may include an electric assist motor which assists rotation of a jet engine of the aircraft in takeoff and re-takeoff of the aircraft, and the power supply control unit may supply the regenerative power to the electric assist motor in the re-takeoff.

With this configuration, the regenerative power generated in the motor generator in landing is efficiently consumed by the reverse thrust unit driven to brake the aircraft after landing and the electric assist motor driven to assist the rotation of the jet engine in re-takeoff after cancelling landing, and thus the regenerative power can be effectively utilized.

Further, with the power supply control unit, the regenerative power generated by the taxiing motor can be supplied also to other electric devices provided in the aircraft in addition to the electric element.

With this configuration, even when all the regenerative power generated by the taxiing motor is not completely consumed by the electric elements driven in re-takeoff, the surplus regenerative power can be effectively utilized by electric devices provided in the aircraft.

This application claims the benefit of priority of the Japanese Patent Application No. 2015-235530 filed on December 2, 2015.

### INDUSTRIAL APPLICABILITY

An electric taxiing system of an aircraft according to an aspect of the present disclosure can be widely applicable to aircrafts using the power of electric motors as driving force whether an aircraft is for commercial or military usage, or whether an aircraft is for passengers or freight.

### REFERENCE SIGNS LIST

1 aircraft
3 fuselage
5 front landing gear
5a, 7a wheel
5b, 7b electric landing gear motor
5c, 7c electric landing gear motor controller
7 main landing gear
9, 11 wing
9a, 11a spoiler
9b, 11b, 13b, 15b electric actuator
13, 15 engine nacelle
13a, 15anacelle cover
17, 19 jet engine
21 power supply bus
23 refrigeration cycle (VCS)
25 refrigeration cycle control system (environmental control system; ECS)
27 power supply controller
29a, 31a, 33a, 35a starter·generator
29b, 31b, 33b, 35b starter-generator controller

## Claims

1. An electric taxiing system of an aircraft comprising:
a wheel (5a, 7a) of an aircraft (1);
a taxiing motor (5b, 7b) which is rotated together with the wheel (5a, 7a) in landing of the aircraft (1) to apply braking force to the wheel (5a, 7a) and to generate regenerative power according to the braking force, and which rotates the wheel (5a, 7a) in taxiing of the aircraft (1); and electric elements (9b, lib, 13b, 15b, 29a, 31a) of the aircraft; and
a power supply control unit (27) which supplies the regenerative power to the electric elements (9b, 11b, 13b, 15b, 29a, 31a) of the aircraft (1), said electric elements (9b, 11b, 13b, 15b, 29a, 31a) including electric actuators (9b, 11b, 13b, 15b), and causes at least the electric actuators (9b, 11b, 13b, 15b) to consume the regenerative power while the regenerative power is being generated, the electric elements (9b, 11b, 13b, 15b, 29a, 31a) being driven in order for the aircraft (1) to perform landing or re-takeoff after cancelling landing,
wherein
the electric elements include a reverse thrust unit (9b, 11b, 13b, 15b) which deflects a bypass air flow of a jet engine (17, 19) of the aircraft (1) toward a front of the aircraft (1) in landing of the aircraft (1).

2. The electric taxiing system of an aircraft according to claim 1, wherein
the electric elements include an electric assist motor (29a, 31a) which assists rotation of a jet engine (17, 19) of the aircraft (1) in takeoff and re-takeoff of the aircraft (1), and
the power supply control unit (27) supplies the regenerative power to the electric assist motor (29a, 31a) in the re-takeoff.

3. The electric taxiing system of an aircraft according to claim 1 or 2, wherein
the power supply control unit (27) supplies the regenerative power also to an electric device (23, 25) provided in the aircraft (1) other than the electric elements (9b, 11b, 13b, 15b, 29a, 31a).

4. A method of controlling an electric taxiing system of an aircraft, comprising:
rotating a taxiing motor (5b, 7b), which rotates a wheel (5a, 7a) of an aircraft (1) in taxiing, together with the wheel (5a, 7a) in landing of the aircraft (1) to apply braking force to the wheel (5a, 7a) and to generate regenerative power according to the braking force; and
supplying the regenerative power to electric elements (9b, 11b, 13b, 15b, 29a, 31a) of the aircraft (1) , said electric elements (9b, 11b, 13b, 15b, 29a, 31a) including electric actuators (9b, 11b, 13b, 15b), and causing the electric actuators (9b, 11b, 13b, 15b) to consume the regenerative power while the regenerative power is being generated, the electric elements (9b, 11b, 13b, 15b, 29a, 31a) being driven in order for the aircraft (1) to perform landing or re-takeoff after cancelling landing,
wherein
the electric elements include a reverse thrust unit (9b, 11b, 13b, 15b) which deflects a bypass air flow of a jet engine (17, 19) of the aircraft (1) toward a front of the aircraft (1) in landing of the aircraft (1).

## Patentansprüche

1. Elektrisches Rollsystem eines Flugzeugs, umfassend:
ein Rad (5a, 7a) eines Flugzeugs (1);
einen Rollmotor (5b, 7b), der zusammen mit dem Rad (5a, 7a) beim Landen des Flugzeugs (1) gedreht wird, um eine Bremskraft auf das Rad (5a, 7a) auszuüben und entsprechend der Bremskraft Regenerativstrom zu erzeugen, und der das Rad (5a, 7a) beim Rollen des Flugzeugs (1) dreht; und elektrische Elemente (9b, 11b, 13b, 15b, 29a, 31a) des Flugzeugs; und
eine Stromversorgungssteuereinheit (27), die den elektrischen Elementen (9b, 11b, 13b, 15b, 29a, 31a) des Flugzeugs (1) den Regenerativstrom zuführt, wobei die elektrischen Elemente (9b, 11b, 13b, 15b, 29a, 31a) elektrische Aktoren (9b, 11b, 13b, 15b) umfassen, und die bewirkt, dass mindestens die elektrischen Aktoren (9b, 11b, 13b, 15b) den Regenerativstrom verbrauchen, während der Regenerativstrom erzeugt wird, wobei die elektrischen Elemente (9b, 11b, 13b, 15b, 29a, 31a) angetrieben werden, sodass das Flugzeug (1) eine Landung oder einen erneuten Start nach einem Abbruch der Landung ausführen kann,
wobei
die elektrischen Elemente eine Umkehrschubeinheit (9b, 11b, 13b, 15b) umfassen, die einen Bypassluftstrom eines Triebwerks (17, 19) des Flugzeugs (1) beim Landen des Flugzeugs (1) in Richtung einer Vorderseite des Flugzeugs (1) umlenkt.

2. Elektrisches Rollsystem für ein Flugzeug nach Anspruch 1, wobei
die elektrischen Elemente einen elektrischen Hilfsmotor (29a, 31a) umfassen, der die Drehung eines Triebwerks (17, 19) des Flugzeugs (1) beim Starten und erneuten Starten des Flugzeugs (1) unterstützt, und
die Stromversorgungssteuereinheit (27) den Regenerativstrom beim erneuten Start dem elektrischen Hilfsmotor (29a, 31a) zuführt.

3. Elektrisches Rollsystem eines Flugzeugs nach Anspruch 1 oder 2, wobei
die Stromversorgungssteuereinheit (27) den Regenerativstrom auch einer anderen in dem Flugzeug (1) vorgesehenen elektrischen Vorrichtung (23, 25) als die elektrischen Elemente (9b, 11b, 13b, 15b, 29a, 31a) zuführt.

4. Verfahren zur Steuerung eines elektrischen Rollsystems eines Flugzeugs, umfassend:
Drehen eines Rollmotors (5b, 7b), der ein Rad (5a, 7a) eines Flugzeugs (1) beim Rollen dreht, zusammen mit dem Rad (5a, 7a) beim Landen des Flugzeugs (1), um eine Bremskraft auf das Rad (5a, 7a) auszuüben und entsprechend der Bremskraft Regenerativstrom zu erzeugen; und
Zuführen des Regenerativstroms zu elektrischen Elementen (9b, 11b, 13b, 15b, 29a, 31a) des Flugzeugs (1), wobei die elektrischen Elemente (9b, 11b, 13b, 15b, 29a, 31a) elektrische Aktoren (9b, 11b, 13b, 15b) umfassen, und Bewirken, dass die elektrischen Aktoren (9b, 11b, 13b, 15b) den Regenerativstrom verbrauchen, während der Regenerativstrom erzeugt wird, wobei die elektrischen Elemente (9b, 11b, 13b, 15b, 29a, 31a) angetrieben werden, sodass das Flugzeug (1) eine Landung oder einen erneuten Start nach einem Abbruch der Landung ausführen kann,
wobei
die elektrischen Elemente eine Umkehrschubeinheit (9b, 11b, 13b, 15b) umfassen, die einen Bypassluftstrom eines Triebwerks (17, 19) des Flugzeugs (1) beim Landen des Flugzeugs (1) in Richtung einer Vorderseite des Flugzeugs (1) umlenkt.

## Revendications

1. Système de roulage électrique pour aéronef comprenant :
une roue (5a, 7a) d'un aéronef (1) ;
un moteur de roulage électrique (5b, 7b) qui tourne conjointement avec la roue (5a, 7a) lorsque l'aéronef (1) atterrit pour appliquer une force de freinage à la roue (5a, 7a) et pour générer du courant régénératif selon la force de freinage, et qui fait tourner la roue (5a, 7a) en roulage électrique de l'aéronef (1) ; et des éléments électriques (9b, 11b, 13b, 15b, 29a, 31a) de l'aéronef ; et
une unité de commande de l'alimentation électrique (27) qui fournit le courant régénératif aux éléments électriques (9b, 11b, 13b, 15b, 29a, 31a) de l'aéronef (1), lesdits éléments électriques (9b, 11b, 13b, 15b, 29a, 31a) incluant des déclencheurs électriques (9b, 11b, 13b, 15b), et fait qu'au moins les déclencheurs électriques (9b, 11b, 13b, 15b) consomment le courant régénératif tandis que le courant régénératif est en train d'être généré, les éléments électriques (9b, 11b, 13b, 15b, 29a, 31a) étant entraînés afin que l'aéronef (1) exécute l'atterrissage ou le re-décollage après avoir annulé l'atterrissage,
dans lequel
les éléments électriques incluent une unité de poussée inverse (9b, 11b, 13b, 15b) qui dévie un flux d'air de dérivation d'un moteur à réaction (17, 19) de l'aéronef (1) vers un avant de l'aéronef (1) lorsque l'aéronef (1) atterrit.

2. Système de roulage électrique pour aéronef selon la revendication 1, dans lequel
les éléments électriques incluent un moteur d'assistance électrique (29a, 31a) qui aide à la rotation d'un moteur à réaction (17, 19) de l'aéronef (1) au décollage et au re-décollage de l'aéronef (1), et
l'unité de commande de fourniture de courant (27) fournit le courant régénératif au moteur d'assistance électrique (29a, 31a) au re-décollage.

3. Système de roulage électrique pour aéronef selon la revendication 1 ou 2, dans lequel l'unité de commande de fourniture de courant (27) fournit le courant régénératif également à un dispositif électrique (23, 25) prévu dans l'aéronef (1) autre que les éléments électriques (9b, 11b, 13b, 15b, 29a, 31a).

4. Procédé de commande d'un système de roulage électrique pour aéronef, comprenant :
de faire tourner un moteur de roulage électrique (5b, 7b) qui fait tourner une roue (5a, 7a) d'un aéronef (1) en roulage électrique, conjointement avec la roue (5a, 7a) lorsque l'aéronef (1) atterrit pour appliquer une force de freinage à la roue (5a, 7a) et pour générer du courant régénératif selon la force de freinage ; et
de fournir le courant régénératif à des éléments électriques (9b, 11b, 13b, 15b, 29a, 31a) de l'aéronef (1), lesdits éléments électriques (9b, 11b, 13b, 15b, 29a, 31a) incluant des déclencheurs électriques (9b, 11b, 13b, 15b) et faisant que les déclencheurs électriques (9b, 11b, 13b, 15b) consomment le courant régénératif tandis que le courant régénératif est en train d'être généré, les éléments électriques (9b, 11b, 13b, 15b, 29a, 31a) étant entraînés afin que l'aéronef (1) exécute l'atterrissage ou le re-décollage après avoir annulé l'atterrissage,
dans lequel
les éléments électriques incluent une unité de poussée inverse (9b, 11b, 13b, 15b) qui dévie un flux d'air de dérivation d'un moteur à réaction (17, 19) de l'aéronef (1) vers un avant de l'aéronef (1) lorsque l'aéronef (1) atterrit.
